# EUROPÄISCHE PATENTSCHRIFT

(11) **EP 0 702 059 B1**
(45) Veröffentlichungstag und Bekanntmachung des Hinweises auf die Patenterteilung: **18.12.1996**
(21) Anmeldenummer: 95114446.8
(22) Anmeldetag: 14.09.1995
(51) Int. Cl.: C08L 101/02, C08L 29/04, C09J 201/04, C09J 131/04

(54) **Vernetzbare Polymerpulver-Zusammensetzungen**
Crosslinked polymer-powder compositions
Compositions des poudres des polymères réticulables

(30) Priorität: 15.09.1994 DE 4432899
(43) Veröffentlichungstag der Anmeldung: 20.03.1996
(73) Patentinhaber: Wacker-Chemie GmbH, D-81737 München (DE)
(72) Erfinder: Eck, Herbert, Dr., D-84489 Burghausen (DE); Ball, Peter, Dr., D-84547 Emmerting (DE); Lutz, Hermann, Dr., D-84547 Emmerting (DE); Hopf, Heinrich, D-84489 Burghausen (DE)
(74) Vertreter: Schuderer, Michael

(56) Entgegenhaltungen:
- EP-A- 0 394 774
- DE-A- 2 222 033
- DE-A- 3 143 070
- DE-A- 3 942 628

## Beschreibung

Die Erfindung betrifft vernetzbare Polymerpulver-Zusammmensetzungen, Verfahren zu deren Herstellung sowie deren Verwendung.

In der Praxis ist es oft von Vorteil, wenn dem Anwender fertige Systeme bzw. Mischungen beispielsweise als Klebemittel oder Beschichtungsmittel zur Verfügung gestellt werden. Dies gilt etwa für wasserlösliche oder in Wasser dispergierbare, feste Klebe- oder Beschichtungsmittel, welche in Gegenwart starker Säuren vernetzen. Erfolgt die Vernetzung durch Abspaltung von Wasser, dann sind solche Systeme aus vernetzbarem Bindemittel und Säure im wasserfreien Zustand besonders anfällig für vorzeitige Vernetzung.

Es gibt zwar eine Reihe von starken, in fester Form vorliegenden, nicht oder nur sehr schwach hygroskopischen Verbindungen, die in Gegenwart von Wasser stark sauer reagieren, wie zum Beispiel AlCl₃·6H₂O, NaAlCl₄ und Cr(NO₃)₂·9H₂O, aber all diese haben eines gemeinsam: Spuren von Wasser genügen, um Säure freizusetzen, die dann die Vernetzungsreaktion auslöst. Damit ist die Haltbarkeit solcher Mischungen sehr begrenzt, denn bei den in Frage kommenden Produkten ist ein völliger Ausschluß von Wasser (oder anderen protonenhaltigen Lösemitteln wie Alkoholen) nur schwer, in vielen Fällen überhaupt nicht möglich.

Beispiele für wäßrige Dispersionen von in Gegenwart von Säuren oder Metallsalzen vernetzbaren Copolymerisaten sind in der DE-A 2620738 (US-A 4118357) und der DE-A 3942628 (US-A 5296532) genannt. Dabei handelt es sich um wäßrige Dispersionen von N-Methylol-funktionellen Vinylester-Copolymerisaten, welche als Härterzusatz H₂O-lösliche Metallsalze oder Säuren wie HCl oder HNO₃ enthalten. In Wasser redispergierbare Kunststoffpulver, welche durch Trocknung derartiger Dispersionen zugänglich sind, sind nur schwer wasserfrei zu erhalten. Bei zu intensiver Trocknung von wäßrigen Polymerdispersionen wird die Redispergierbarkeit der Polymerpulver negativ beeinflußt. Darüberhinaus enthalten die Dispersionspulver einen Schutzkolloid-Anteil, wobei die gängigen Schutzkolloide wie Polyvinylalkohol, Stärke, Stärkederivate oder Cellulosederivate reaktive Protonen enthalten, welche Säure aus den genannten Härtersalzen freisetzen, was letztendlich wieder zur vorzeitigen Vernetzung der Copolymerisate führt.

Es bestand daher die Aufgabe, durch Säure vernetzbare oder kondensierbare und in Wasser dispergierbare oder in Wasser lösliche Polymerpulver-Zusammensetzungen zur Verfügung zu stellen, welche auch bei einem in der Pulverzusammensetzung enthaltenen Restfeuchte-Anteil nicht zur vorzeitigen Vernetzung oder Kondensation neigen und erst dann vernetzen, wenn die Pulver-Zusammensetzung in Wasser dispergiert oder gelöst wird.

Gegenstand der Erfindung sind durch Säure vernetzbare oder kondensierbare und in Wasser dispergierbare oder in Wasser lösliche Polymerpulver-Zusammensetzungen enthaltend
I) ein oder mehrere pulverförmige, in Wasser dispergierbare oder in Wasser lösliche und durch Säure vernetzbare oder kondensierbare Copolymerisate,
II) ein oder mehrere pulverförmige, in Wasser dispergierbare oder in Wasser lösliche Verbindungen aus der Gruppe der Alkalimetall- oder Ammonium-Peroxosäuresalze,
III) ein oder mehrere pulverförmige, in Wasser dispergierbare oder in Wasser lösliche Reduktionsmittel.

Geeignete durch Säure kondensierbare Copolymerisate I), die entweder in Form wasserlöslicher Pulver oder in Form von in Wasser dispergierbaren Pulvern vorliegen, sind die Aren- und Aminoharze, insbesonders die Phenolharze, Novolake, Resole sowie Polymere mit Carbonyl- oder Thiocarbonylgruppen wie Harnstoff-Formaldehydharze, Melaminformaldehydharze.

Geeignete durch Säure vernetzbare Copolymerisate I) sind Copolymere mit einer T_{g} von -60°C bis +60°C, enthaltend
a) ein oder mehrere Monomereinheiten aus der Gruppe der Vinylester von unverzweigten oder verzweigten Alkylcarbonsäuren mit 1 bis 15 C-Atomen,
   der Ester der Acrylsäure und Methacrylsäure mit unverzweigten oder verzweigten Alkoholen mit 1 bis 12 C-Atomen,
   der Mono- oder Diester der Fumarsäure oder Maleinsäure mit unverzweigten oder verzweigten Alkoholen mit 1 bis 12 C-Atomen,
   der Diene, der Vinylaromaten, der Vinylhalogenide und der α-Olefine und
b) 0.1 bis 20.0 Gew%, bezogen auf das Gesamtgewicht des Copolymers, ein oder mehrere vernetzbare Monomereinheiten aus der Gruppe N-Methylolacrylamid (NMA), N-Methylolmethacrylamid (NMMA), N-(Alkoxymethyl)acrylamide, N-(Alkoxymethyl)methacrylamide oder N-(Alkoxymethyl)(meth)allylcarbamate mit einem C₁- bis C₆-Alkylrest, der Ester von N-Methylol(meth)acrylamid und N-Methylol(meth)allylcarbamate mit C₁- bis C₆-Alkylcarbonsäuren, Acrylamidoglykolsäure (AGA) und Methacrylamidoglykolsäuremethylester (MAGME).

Bevorzugte Vinylester sind Vinylacetat, Vinylpropionat, Vinylbutyrat, Vinyl-2-ethylhexanoat, Vinyllaurat, 1-Methylvinylacetat, Vinylpivalat und Vinylester von α-verzweigten Monocarbonsäuren mit 9 bis 10 C-Atomen, beispielsweise VeoVa9^{R} oder VeoVa10^{R}. Besonders bevorzugt ist Vinylacetat.

Bevorzugte Methacrylsäureester oder Acrylsäureester sind Methylacrylat, Methylmethacrylat, Ethylacrylat, Ethylmethacrylat, Propylacrylat, Propylmethacrylat, n-Butylacrylat, n-Butylmethacrylat, 2-Ethylhexylacrylat. Besonders bevorzugt sind Methylacrylat, Methylmethacrylat, n-Butylacrylat und 2-Ethylhexylacrylat.

Bevorzugte Ester der Fumar- und Maleinsäure sind deren Dimethyl-, Diethyl-, Diisopropyl- und Dibutylester. Bevorzugte Diene sind Butadien und Isopren. Bevorzugte Vinylaromaten sind Styrol, Methylstyrol, Vinyltoluol. Als Vinylhalogenid ist Vinylchlorid bevorzugt. Bevorzugte α-Olefine sind Ethylen und Propylen.

Die Vinylester-Copolymerisate können gegebenenfalls 1.0 bis 50 Gew%, bezogen auf das Gesamtgewicht der Comonomerphase, Comonomereinheiten abgeleitet von α-Olefinen wie Ethylen oder Propylen und/oder Vinylaromaten wie Styrol und/oder Vinylhalogeniden wie Vinylchlorid und/oder Acrylsäureestern bzw. Methacrylsäureestern von Alkoholen mit 1 bis 12 C-Atomen, wie Methylacrylat, Methylmethacrylat, Ethylacrylat, Ethylmethacrylat, Propylacrylat, Propylmethacrylat, n-Butylacrylat, n-Butylmethacrylat, 2-Ethylhexylacrylat und/oder ethylenisch ungesättigten Dicarbonsäureestern bzw. deren Derivate wie Diisopropylfumarat, die Dimethyl-, Dibutyl- und Diethylester der Maleinsäure bzw. Fumarsäure, oder Maleinsäureanhydrid enthalten. Die Auswahl aus den genannten Monomeren wird dabei vorzugsweise so getroffen, daß Copolymerisate mit einer Glasübergangstemperatur T_{g} von -30°C bis +30°C erhalten werden.

Die (Meth)acrylsäureester-Copolymerisate können gegebenenfalls 1.0 bis 50 Gew%, bezogen auf das Gesamtgewicht der Comonomerphase, Comonomereinheiten abgeleitet von α-Olefinen wie Ethylen oder Propylen und/oder Vinylaromaten wie Styrol und/oder Vinylhalogeniden wie Vinylchlorid und/oder ethylenisch ungesättigten Dicarbonsäureestern bzw. deren Derivate wie Diisopropylfumarat, die Dimethyl-, Dibutyl- und Diethylester der Maleinsäure bzw. Fumarsäure, oder Maleinsäureanhydrid enthalten. Die Auswahl aus den genannten Monomeren wird dabei vorzugsweise so getroffen, daß Copolymerisate mit einer Glasübergangstemperatur T_{g} von -30°C bis +30°C erhalten werden.

Gegebenenfalls enthalten die Vinylester-Copolymerisate und die (Meth)acrylsäureester-Copolymerisate noch 0.05 bis 10.0 Gew%, bezogen auf das Gesamtgewicht des Comonomergemisches, ein oder mehrere Hilfsmonomere aus der Gruppe der ethylenisch ungesättigten Carbonsäuren, vorzugsweise Acrylsäure oder Methacrylsäure, aus der Gruppe der ethylenisch ungesättigten Carbonsäureamide, vorzugsweise Acrylamid und 2-Acrylamidopropansulfonsäure, aus der Gruppe der ethylenisch ungesättigten Sulfonsäuren bzw. deren Salze, vorzugsweise Vinylsulfonsäure, aus der Gruppe der mehrfach ethylenisch ungesättigten Comonomeren, beispielsweise Divinyladipat, 1,9-Decadien, Allylmethacrylat, Triallylcyanurat, aus der Gruppe der siliciumhaltigen ethylenisch ungesättigten Verbindungen wie γ-Acryl-, γ-Methacryloxypropyltri(alkoxy)silane und Vinyltrialkoxysilane, wobei als Alkoxygruppen beispielsweise Methoxy-, Ethoxy-, Methoxyethylen-, Ethoxyethylen-, Methoxypropylenglykolether-, Ethoxypropylenglykolether-Reste enthalten sind .

Bevorzugte Vinylester-Copolymerisate enthalten als Comonomereinheiten a), jeweils bezogen auf das Gesamtgewicht des Copolymers:
90 bis 99.9 Gew% Vinylester, insbesonders Vinylacetat;
49.9 bis 98.9 Gew% Vinylester, insbesonders Vinylacetat sowie 1 bis 50 Gew% α-Olefin, insbesonders Ethylen;
40 bis 80 Gew% Vinylacetat, 5 bis 45 Gew% Vinyllaurat oder Vinylester einer α-verzweigten Carbonsäure, insbesonders VeoVa9^{R} und/oder VeoVa10^{R}, sowie 0 bis 40 Gew% Ethylen;
70 bis 98.9 Gew% Vinylacetat und 1 bis 30 Gew% Vinylester einer α-verzweigten Carbonsäure, insbesonders VeoVa9^{R} und/oder VeoVa10^{R};
70 bis 98.9 Gew% Vinylester, insbesonders Vinylacetat, und 1 bis 30 Gew% (Meth)acrylsäureester, insbesonders Ethylacrylat, n-Butylacrylat oder 2-Ethylhexylacrylat;
50 bis 75 Gew% Vinylacetat, 1 bis 30 Gew% Acrylsäureester, insbesonders n-Butylacrylat oder 2-Ethylhexylacrylat, sowie 1 bis 40 Gew% Ethylen;
30 bis 75 Gew% Vinylacetat, 1 bis 30 Gew% Vinylester einer α-verzweigten Carbonsäure, insbesonders VeoVa9^{R} und/oder VeoVa10^{R}, 1 bis 30 Gew% Acrylsäureester, insbesonders n-Butylacrylat oder 2-Ethylhexylacrylat, sowie 1 bis 40 Gew% Ethylen;
15 bis 70 Gew% Vinylacetat, 25 bis 80 Gew% Vinylchlorid und 4 bis 40 Gew% Vinyllaurat;
40 bis 80 Gew% Vinylchlorid, 9 bis 35 Gew% Ethylen, 10 bis 45 Gew% Vinyllaurat und 0 bis 40 Gew% Vinylacetat;
20 bis 80 Gew% Vinylchlorid, 19 bis 40 Gew% Ethylen und 0 bis 60 Gew% eines oder mehrerer Monomere aus der Gruppe Vinylacetat, n-Butylacrylat, 2-Ethylhexylacrylat;
20 bis 60 Gew% Vinylacetat, 30 bis 60 Gew% Dibutyl- oder Diethylhexylmaleinat oder -fumarat und 0 bis 40 Gew% Vinyllaurat; 20 bis 69 Gew% Vinylacetat, 0 bis 30 Gew% Ethylen und 10 bis 40 Gew% eines oder mehrerer Monomere aus der Gruppe Diisopropylmaleinat, Diisopropylfumarat, Di-t-butylmaleinat, Di-t-butylfumarat, Methyl-t-butylmaleinat, Methyl-t-butylfumarat.

Bevorzugte (Meth)acrylsäureester-Copolymerisate enthalten als Comonomereinheiten a), jeweils bezogen auf das Gesamtgewicht des Copolymers:
90 bis 99.9 Gew% n-Butylacrylat und/oder 2-Ethylhexylacrylat;
40 bis 59.9 Gew% Methylmethacrylat, 59.9 bis 40 Gew% n-Butylacrylat und/oder 2-Ethylhexylacrylat;
50 bis 77 Gew% Ethylacrylat und 3 bis 40 Gew% Methacrylsäure;
40 bis 64.9 Gew% Styrol und 35 bis 59.9 Gew% n-Butylacrylat und/oder 2-Ethylhexylacrylat.

Bevorzugte Comonomereinheiten b) sind N-Methylolacrylamid, N-Methylolmethacrylamid, N-(Isobutoxymethyl)-acrylamid (IBMA) und N-(n-Butoxymethyl)-acrylamid (NBMA). Vorzugsweise enthalten die Copolymere 0.5 bis 3.0 Gew% der Comonomereinheiten b), bezogen auf das Gesamtgewicht des Copolymers.

Die Polymerisation erfolgt vorzugsweise mit dem Emulsionspolymerisationsverfahren, kann aber auch mittels des Block- oder des Lösungspolymerisationsverfahrens durchgeführt werden. Bei den beiden letztgenannten Verfahren werden die in organischen, wasserunlöslichen Lösungsmitteln gelösten Copolymerisate mit Hilfe der später genannten Schutzkolloide und gegebenenfalls mit Emulgatoren in Wasser dispergiert und, gegebenenfalls nach Zugabe weiterer Zusatzstoffe, sprühgetrocknet.

Das als bevorzugt genannte Emulsionspolymerisationsverfahren wird im offenen Reaktionsgefäß oder in Druckgefäßen, vorzugsweise in einem Temperaturbereich von 0 bis 100°C durchgeführt und mit den für die Emulsionspolymerisation üblicherweise eingesetzten Methoden eingeleitet. Die Initiierung erfolgt mittels der üblichen wasserlöslichen Radikalbildner, die vorzugsweise in Mengen von 0.01 bis 1.0 Gew%, bezogen auf das Gesamtgewicht der Monomeren, eingesetzt werden. Beispiele hierfür sind Ammonium- und Kaliumpersulfat, Alkylhydroperoxide, wie tert.-Butylhydroperoxid; Wasserstoffperoxid. Gegebenenfalls können die genannten radikalischen Initiatoren auch in bekannter Weise mit 0.01 bis 0.5 Gew%, bezogen auf das Gesamtgewicht der Monomeren, Reduktionsmittel kombiniert werden. Geeignet sind zum Beispiel Formaldehydsulfoxylat-Salze, Natriumbisulfit oder Ascorbinsäure. Bei der Redoxinitiierung werden dabei vorzugsweise eine oder beide Redox-Katalysatorkomponenten während der Polymerisation dosiert.

Die Polymerisation kann diskontinuierlich oder kontinuierlich, mit oder ohne Verwendung von Saatlatices, unter Vorlage aller oder einzelner Bestandteile des Reaktionsgemisches, oder unter teilweiser Vorlage und Nachdosierung der oder einzelner Bestandteile des Reaktionsgemisches, oder nach dem Dosierverfahren ohne Vorlage durchgeführt werden. Alle Dosierungen erfolgen vorzugsweise im Maße des Verbrauchs der jeweiligen Komponente.

In einer bevorzugten Ausführungsform werden 10 bis 25 Gew% der Comonomeren a) vorgelegt und der Rest zusammen mit den Comonomeren b) in Emulsion zudosiert. Bei der Copolymerisation mit Ethylen wird vorzugsweise bei einem Druck von 20 bis 100 bar abs. gearbeitet.

Als Dispergiermittel können alle üblicherweise bei der Emulsionspolymerisation verwendeten Emulgatoren und Schutzkolloide eingesetzt werden. Vorzugsweise werden 0 bis 4 Gew%, bezogen auf das Gesamtgewicht der Monomeren, an Emulgator eingesetzt.Geeignet sind beispielsweise anionische Tenside, wie Alkylsulfate mit einer Kettenlänge von 8 bis 18 C-Atomen, Alkyl- und Alkylarylethersulfate mit 8 bis 18 C-Atomen im hydrophoben Rest und bis zu 40 Ethylen- oder Propylenoxideinheiten, Alkyl- oder Alkylarylsulfonate mit 8 bis 18 C-Atomen, Ester und Halbester der Sulfobernsteinsäure mit einwertigen Alkoholen oder Alkylphenolen. Geeignete nichtionische Tenside sind beispielsweise Alkylpolyglykolether oder Alkylarylpolyglykolether mit 8 bis 40 Ethylenoxideinheiten.

Vorzugsweise werden als Dispergiermittel Schutzkolloide, im allgemeinen in Mengen von bis zu 10 Gew%, bezogen auf das Gesamtgewicht der Monomeren, eingesetzt. Beispiele hierfür sind Vinylalkohol/Vinylacetat-Copolymere mit einem Gehalt von 80 bis 100 Mol% Vinylalkoholeinheiten, Polyvinylpyrrolidone mit einem Molekulargewicht von 5000 bis 400000, mit Hydroxyethyl-, Carboxymethyl-, Hydroxypropyl- und/oder Methylsubstituierte Cellulosen mit einem Substitutionsgradbereich von 1.5 bis 3, wasserlösliche Stärken und Stärkederivate sowie andere wasserlösliche Polysaccharide oder deren wasserlösliche Derivate, ferner Phenol- und Naphthalin-formaldehydsulfonate, Styrolmaleinsäure- und Vinylethermaleinsäure-Copolymere, wasserlösliche Proteine wie Casein und Gelatine.

Der für die Polymerisation gewünschte pH-Bereich, der im allgemeinen zwischen 3 und 7 liegt, kann in bekannter Weise durch Säuren, Basen oder übliche Puffersalze, wie Alkaliphosphate oder Alkalicarbonate, eingestellt werden. Zur Molekulargewichtseinstellung können bei der Polymerisation die üblicherweise verwendeten Regler, zum Beispiel Mercaptane, Aldehyde und Chlorkohlenwasserstoffe, zugesetzt werden.

Der Feststoffgehalt der wäßrigen Dispersionen beträgt vorzugsweise 20 bis 60 Gew%.

Zur Herstellung der Dispersionspulver wird die Dispersion getrocknet, vorzugsweise sprühgetrocknet oder gefriergetrocknet, besonders bevorzugt sprühgetrocknet. Hierbei kann auf die bekannten Vorrichtungen, wie zum Beispiel Versprühen durch Ein-, Zwei- oder Mehrstoffdüsen oder mit einer rotierenden Scheibe, in einem gegebenenfalls erhitzten Trockengasstrom, zurückgegriffen werden. Im allgemeinen liegen die Austrittstemperaturen im Bereich von 55 bis 100°C, bevorzugt 70 bis 90°C, je nach Anlage, T_{g} des Copolymerisats und gewünschtem Trocknungsgrad.

Bei der Sprühtrocknung kann gegebenenfalls eine Mischung aus der wäßrigen Dispersion mit einem Festgehalt von vorzugsweise 20 bis 60 % und von weiteren Zusatzstoffen, gemeinsam versprüht und getrocknet werden.

In einer bevorzugten Ausführungsform werden der Dispersion vor dem Sprühtrocknen 8 bis 50 Gew%, vorzugsweise 10 bis 25 Gew% Schutzkolloid, bezogen auf das Copolymerisatgewicht, bevorzugt in Form einer wässrigen Lösung zugegeben. Geeignete Schutzkolloide sind beispielsweise Polyvinylalkohole und deren Derivate; Polysaccharide in wasserlöslicher Form wie Stärken, Cellulose und deren Carboxymethyl-, Methyl-, Hydroxyethyl-, Hydroxypropyl-Derivate; synthetische Polymere wie Poly(meth)acrylsäure, Poly(meth)acrylamid, Polyvinylsulfonsäuren und deren wasserlöslichen Copolymere; Melaminformaldehydsulfonate, Naphthalinformaldehydsulfonate, Styrolmaleinsäure- und Vinylethermaleinsäure-Copolymere.

Weitere Bestandteile, die dem getrockneten Copolymerisat zugegeben werden können sind Emulgatoren, die in den eingesetzten Schutzkolloiden nicht löslich sind, sowie Antiblockmittel wie Ca- bzw. Mg-carbonat, Talk, Gips, Kieselsäure, Silicate mit Teilchengrößen vorzugsweise im Bereich von 5 nm bis 10µm.

Nach dem Trocknungsvorgang liegen die vernetzbaren Copolymerisate I) als in Wasser redispergierbare oder in Wasser lösliche Pulver, gegebenenfalls als Mischung mit den Antiblockmitteln und den anderen obengenannten Zusätzen, vor.

Zur Herstellung der erfindungsgemäßen Polymerpulver-Zusammensetzung wird den vernetzbaren bzw. kondensierbaren Copolymerisaten I) die Komponente II) zugemischt. Vorzugsweise enthält die Polymerpulver-Zusammensetzung 0.5 bis 10.0 Gew% der Komponente II), bezogen auf das Gewicht der Komponente I).

Als Komponente II) werden ein oder mehrere pulverförmige, in Wasser dispergierbare oder in Wasser lösliche Verbindungen aus der Gruppe der Alkalimetall- oder Ammonium-Peroxosäuresalze eingesetzt, die in ihrer reduzierten Form stark sauer wirken. Vorzugsweise ein oder mehrere Verbindungen aus der Gruppe Alkalimetall-Peroxodisulfat wie Kaliumperoxodisulfat, Ammonium-Peroxodisulfat, Alkalimetall-Peroxodiphosphat wie Kaliumperoxodiphosphat und Ammonium-Peroxodiphosphat. Besonders bevorzugt wird Ammonium-Peroxodiphosphat.

Im selben Arbeitsgang kann auch die Komponente III) zugemischt werden. Vorzugsweise enthält die Polymerpulver-Zusammensetzung 0.5 bis 10.0 Gew% der Komponente III), bezogen auf das Gewicht der Komponente I).

Als Komponente III) geeignet sind ein oder mehrere pulverförmige, in Wasser dispergierbare oder in Wasser lösliche Reduktionsmittel, die in ihrer oxidierten Form die aus den Peroxosäuresalzen freigesetzten Säuren nicht neutralisieren oder stark abpuffern. Vorzugsweise ein oder mehrere Verbindungen aus der Gruppe der reduzierend wirkenden Schwefelverbindungen wie Kalium-Formaldehydsulfoxylat, Natrium-Formaldehydsulfoxylat (Brüggolit), Alkalimetall-Hydrogensulfit wie Kalium- oder Natrium-hydrogensulfit, Alkalimetall-Bisulfit wie Natriumbisulfit, Dithionit, Natriumthiosulfat, Formamidinsulfinsäure; Natriumhypophosphit; sowie reduzierend wirkende organische Verbindungen wie Glucose und insbesonders solche mit Endiolgruppierung wie Ascorbinsäure, oder Dihydroxymaleinsaure. Besonders bevorzugt wird Natriumformaldehydsulfoxylat und Ascorbinsäure.

Die Zumischung kann nach dem Trocknungsvorgang kontinuierlich oder diskontinuierlich, gegebenenfalls zusammen mit weiteren Zusatzstoffen wie Antiblockmitteln oder auch getrennt erfolgen.

Die erfindungsgemäßen durch Säure vernetzbare oder kondensierbare und in Wasser dispergierbare oder in Wasser lösliche Polymerpulver-Zusammensetzungen eignen sich als Bindemittel in Anwendungsgebieten, in denen neben einer guten Haftung auch Wasser- und Lösungsmittelfestigkeit erwünscht ist. Beispiele hierfür sind die Verwendung als Beschichtungsmittel, als Klebemittel oder als Bindemittel für Textilien und Papier.

Die nachfolgenden Beispiele dienen zur weiteren Erläuterung der Erfindung.

### Herstellung der Polymerpulver-Zusammensetzung:

Als Basispolymerisat für die in Tabelle 1 aufgeführten Beispiele oder Vergleichsbeispiele diente ein Copolymerisat von 99.2 GewTeilen Vinylacetat und 0.8 GewTeilen N-Methylolacrylamid, welches nach dem Emulsionspolymerisationsverfahren, in Gegenwart von Polyvinylalkohol als Schutzkolloid, hergestellt wurde. Nach der Sprühtrocknung lag ein in Wasser redispergierbares Pulver vor, welches 15 GewTeile Polyvinylalkohol auf 100 Teile Copolymerisat I) enthielt.

In den Beispielen 1 und 2 wurden Polymerpulver-Zusammensetzungen hergestellt, welche neben 100 GewTeilen Copolymerisat I) noch 4 GewTeile Kaliumperoxodisulfat als Komponente II) und 2.4 GewTeile Natrium-Formaldehydsulfoxylat als Komponente III) enthielt.

In den Beispielen 3 und 4 wurden Polymerpulver-Zusammensetzungen hergestellt, welche neben 100 GewTeilen Copolymerisat I) noch 3.4 GewTeile Kaliumperoxodisulfat als Komponente II) und 2.7 GewTeile Ascorbinsäure als Komponente III) enthielt. Die Zusammensetzung gemäß Beispiel 5 entsprach der der Beispiele 3 und 4, nur daß zusätzlich noch 5 GewTeile Hydrite als Antiblockmittel in die Zusammensetzung eingearbeitet worden sind.

Als Vergleichsbeispiele wurden Polymerpulver-Zusammmensetzungen eingesetzt, welche wie im Fall der Vergleichsbeispiele 6 und 7 nur das Copolymerisat I) enthielten oder wie im Fall der Vergleichsbeispiele 8 und 10 zusätzlich noch 6 GewTeile AlCl₃·6H₂O als Härtersalz oder wie im Fall der Vergleichsbeispiele 9 und 11 zusätzlich noch 5 GewTeile NaAlCl₄ als Härtersalz enthielten.

### Anwendungstechnische Prüfung:

### Bestimmung der Klebefestigkeit D 3/3:

Die Prüfung erfolgte nach der Europanorm DIN EN 204.

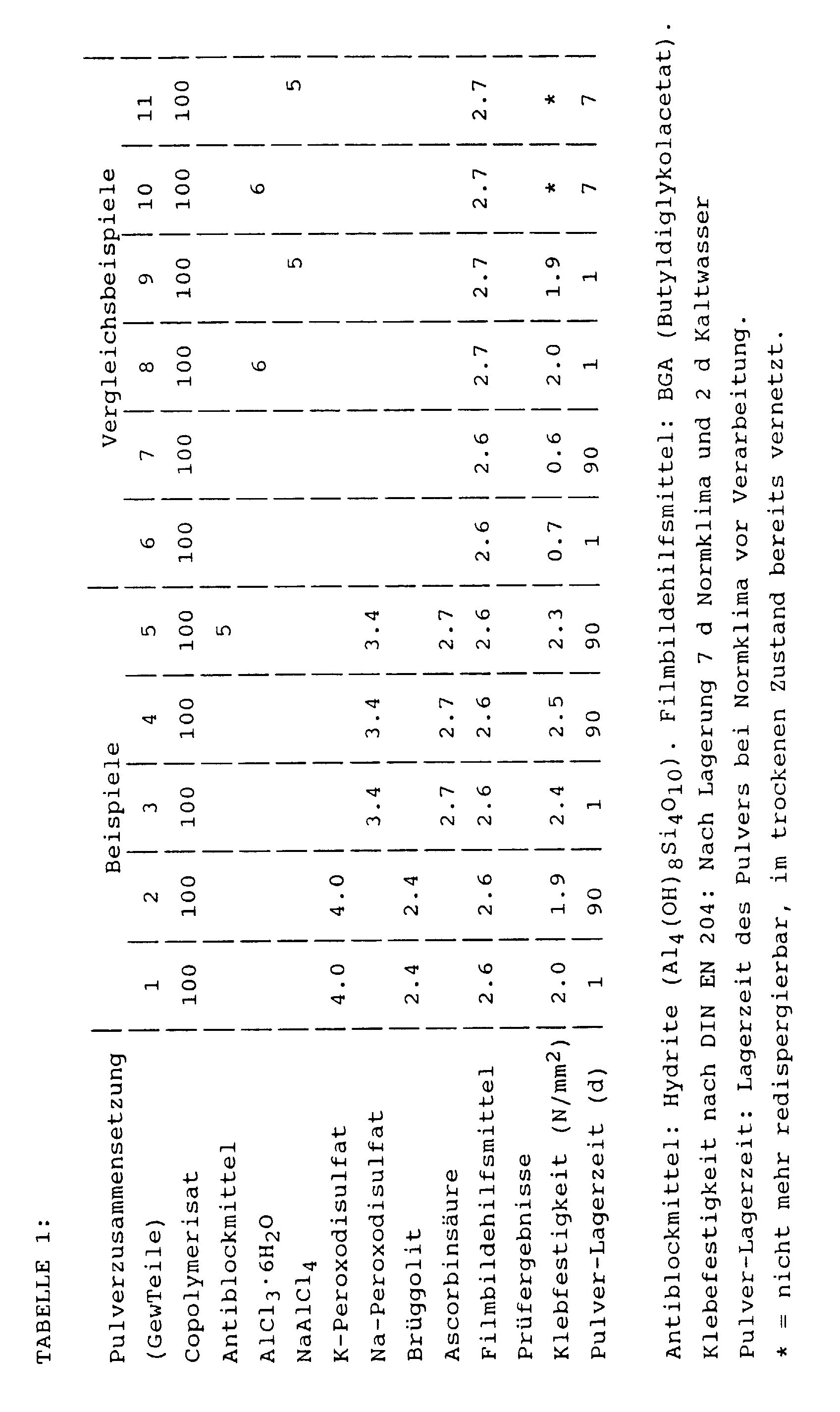

## Patentansprüche

1. Durch Säure vernetzbare oder kondensierbare und in Wasser dispergierbare oder in Wasser lösliche Polymerpulver-Zusammensetzungen enthaltend
I) ein oder mehrere pulverförmige, in Wasser dispergierbare oder in Wasser lösliche und durch Säure vernetzbare oder kondensierbare Copolymerisate,
II) ein oder mehrere pulverförmige, in Wasser dispergierbare oder in Wasser lösliche Verbindungen aus der Gruppe der Alkalimetall- oder Ammonium-Peroxosäuresalze,
III) ein oder mehrere pulverförmige, in Wasser dispergierbare oder in Wasser lösliche Reduktionsmittel.

2. Polymerpulver-Zusammensetzungen nach Anspruch 1, dadurch gekennzeichnet, daß als durch Säure kondensierbare Copolymerisate I) Aren-, Aminoharze oder Polymere mit Carbonyl- oder Thiocarbonylgruppen enthalten sind.

3. Polymerpulver-Zusammensetzungen nach Anspruch 2, dadurch gekennzeichnet, daß als durch Säure kondensierbare Copolymerisate I) Phenolharze, Novolake, Resole oder Harnstoff-Formaldehydharze, Melaminformaldehydharze enthalten sind.

4. Polymerpulver-Zusammensetzungen nach Anspruch 1, dadurch gekennzeichnet, daß als durch Säure vernetzbare Copolymerisate I) Copolymere mit einer T_{g} von -60°C bis +60°C, enthaltend
a) ein oder mehrere Monomereinheiten aus der Gruppe der Vinylester von unverzweigten oder verzweigten Alkylcarbonsäuren mit 1 bis 15 C-Atomen,
der Ester der Acrylsäure und Methacrylsäure mit unverzweigten oder verzweigten Alkoholen mit 1 bis 12 C-Atomen,
der Mono- oder Diester der Fumarsäure oder Maleinsäure mit unverzweigten oder verzweigten Alkoholen mit 1 bis 12 C-Atomen,
der Diene, der Vinylaromaten, der Vinylhalogenide und der α-Olefine und
b) 0.1 bis 20.0 Gew%, bezogen auf das Gesamtgewicht des Copolymers, ein oder mehrere vernetzbare Monomereinheiten aus der Gruppe N-Methylolacrylamid (NMA), N-Methylolmethacrylamid (NMMA), N-(Alkoxymethyl)acrylamide, N-(Alkoxymethyl)methacrylamide oder N-(Alkoxymethyl)(meth)-allylcarbamate mit einem C₁- bis C₆-Alkylrest, der Ester von N-Methylol(meth)acrylamid und N-Methylol(meth)-allylcarbamate mit C₁- bis C₆-Alkylcarbonsäuren, Acrylamidoglykolsäure (AGA) und Methacrylamidoglykolsäuremethylester (MAGME)
enthalten sind.

5. Polymerpulver-Zusammensetzungen nach Anspruch 4, dadurch gekennzeichnet, daß als Comonomereinheiten a) enthalten sind, jeweils bezogen auf das Gesamtgewicht des Copolymers,
90 bis 99.9 Gew% Vinylester, insbesonders Vinylacetat,
oder
49.9 bis 98.9 Gew% Vinylester, insbesonders Vinylacetat sowie 1 bis 50 Gew% α-Olefin, insbesonders Ethylen,
oder
40 bis 80 Gew% Vinylacetat, 5 bis 45 Gew% Vinyllaurat oder Vinylester einer α-verzweigten Carbonsäure, insbesonders VeoVa9^{R} und/oder VeoVa10^{R}, sowie 0 bis 40 Gew% Ethylen,
oder
70 bis 98.9 Gew% Vinylacetat und 1 bis 30 Gew% Vinylester einer α-verzweigten Carbonsäure, insbesonders VeoVa9^{R} und/oder VeoVa10^{R},
oder
70 bis 98.9 Gew% Vinylester, insbesonders Vinylacetat, und 1 bis 30 Gew% (Meth)acrylsäureester, insbesonders Ethylacrylat, n-Butylacrylat oder 2-Ethylhexylacrylat,
oder
50 bis 75 Gew% Vinylacetat, 1 bis 30 Gew% Acrylsäureester, insbesonders n-Butylacrylat oder 2-Ethylhexylacrylat, sowie 1 bis 40 Gew% Ethylen,
30 bis 75 Gew% Vinylacetat, 1 bis 30 Gew% Vinylester einer α-verzweigten Carbonsäure, insbesonders VeoVa9^{R} und/oder VeoVa10^{R}, 1 bis 30 Gew% Acrylsäureester, insbesonders n-Butylacrylat oder 2-Ethylhexylacrylat, sowie 1 bis 40 Gew% Ethylen,
oder
15 bis 70 Gew% Vinylacetat, 25 bis 80 Gew% Vinylchlorid und 4 bis 40 Gew% Vinyllaurat,
oder
40 bis 80 Gew% Vinylchlorid, 9 bis 35 Gew% Ethylen, 10 bis 45 Gew% Vinyllaurat und 0 bis 40 Gew% Vinylacetat,
oder
20 bis 80 Gew% Vinylchlorid, 19 bis 40 Gew% Ethylen und 0 bis 60 Gew% eines oder mehrerer Monomere aus der Gruppe Vinylacetat, n-Butylacrylat, 2-Ethylhexylacrylat,
oder
20 bis 60 Gew% Vinylacetat, 30 bis 60 Gew% Dibutyl- oder Diethylhexylmaleinat oder -fumarat und 0 bis 40 Gew% Vinyllaurat,
oder
20 bis 69 Gew% Vinylacetat, 0 bis 30 Gew% Ethylen und 10 bis 40 Gew% eines oder mehrerer Monomere aus der Gruppe Diisopropylmaleinat, Diisopropylfumarat, Di-t-butylmaleinat, Di-t-butylfumarat, Methyl-t-butylmaleinat, Methyl-t-butylfumarat.

6. Polymerpulver-Zusammensetzungen nach Anspruch 4, dadurch gekennzeichnet, daß als Comonomereinheiten a) enthalten sind, jeweils bezogen auf das Gesamtgewicht des Copolymers,
90 bis 99.9 Gew% n-Butylacrylat und/oder 2-Ethylhexylacrylat,
oder
40 bis 59.9 Gew% Methylmethacrylat, 59.9 bis 40 Gew% n-Butylacrylat und/oder 2-Ethylhexylacrylat,
oder
50 bis 77 Gew% Ethylacrylat und 3 bis 40 Gew% Methacrylsäure,
oder
40 bis 64.9 Gew% Styrol und 35 bis 59.9 Gew% n-Butylacrylat und/oder 2-Ethylhexylacrylat.

7. Polymerpulver-Zusammensetzungen nach Anspruch 4 bis 6, dadurch gekennzeichnet, daß als Comonomereinheiten b) 0.5 bis 3.0 Gew%, bezogen auf das Gesamtgewicht des Copolymers, N-Methylolacrylamid, N-Methylolmethacrylamid, N-(Isobutoxymethyl)-acrylamid (IBMA) und/oder N-(n-Butoxymethyl)-acrylamid (NBMA) enthalten sind.

8. Polymerpulver-Zusammensetzungen nach Anspruch 1 bis 7, dadurch gekennzeichnet, daß als Komponente II) 0.5 bis 10.0 Gew%, bezogen auf das Gewicht der Komponente I), einer oder mehrerer Verbindungen aus der Gruppe Natrium-, Kalium-, Ammonium-Peroxodisulfat und Natrium-, Kalium-, Ammonium-Peroxodiphosphat enthalten sind.

9. Polymerpulver-Zusammensetzungen nach Anspruch 1 bis 8, dadurch gekennzeichnet, daß als Komponente III) 0.5 bis 10.0 Gew%, bezogen auf das Gewicht der Komponente I), einer oder mehrerer Verbindungen aus der Gruppe Kalium-Formaldehydsulfoxylat, Natrium-Formaldehydsulfoxylat, Alkalimetall-Hydrogensulfit wie Kalium- oder Natriumhydrogensulfit, Alkalimetall-Bisulfit wie Natriumbisulfit, Dithionit, Natriumthiosulfat, Formamidinsulfinsäure, Natriumhypophosphit, Ascorbinsäure, Glucose, Dihydroxymaleinsäure enthalten sind.

10. Verfahren zur Herstellung von Polymerpulver-Zusammensetzungen nach Anspruch 1 bis 9, wobei den als Pulver vorliegenden, vernetzbaren bzw. kondensierbaren Copolymerisaten I) die pulverförmigen Komponenten II) und III) zugemischt werden.

11. Verwendung der Polymerpulver-Zusammensetzung nach Anspruch 1 bis 9 als Beschichtungsmittel, als Klebemittel oder als Bindemittel für Textilien und Papier.

## Claims

1. Water-dispersible or water-soluble polymer powder compositions which can be crosslinked or condensed by acid and comprise
I) one or more pulverulent water-dispersible or watersoluble copolymers which can be crosslinked or condensed by acid,
II) one or more pulverulent water-dispersible or watersoluble compounds from the group consisting of alkali metal or ammonium peroxo acid salts, and
III) one or more pulverulent water-dispersible or watersoluble reducing agents.

2. Polymer powder compositions according to Claim 1, characterized in that they comprise arene or amino resins or polymers having carbonyl or thiocarbonyl groups as copolymers I) which can be condensed by acid.

3. Polymer powder compositions according to Claim 2, characterized in that they comprise phenolic resins, novolaks, resols or urea-formaldehyde resins or melamine-formaldehyde resins as copolymers I) which can be condensed by acid.

4. Polymer powder compositions according to claim 1, characterized in that they comprise copolymers which have a T_{g} of -60°C to +60°C and comprise
a) one or more monomer units from the group consisting of vinyl esters of unbranched or branched alkylcarboxylic acids having 1 to 15 C atoms,
esters of acrylic acid and methacrylic acid with unbranched or branched alcohols having 1 to 12 C atoms,
mono- or diesters of fumaric acid or maleic acid with unbranched or branched alcohols having 1 to 12 C atoms,
dienes, vinyl aromatics, vinyl halides and α-olefins and
b) 0.1 to 20.0% by weight, based on the total weight of the copolymer, of one or more crosslinkable monomer units from the group consisting of N-methylolacrylamide (NMA), N-methylolmethacrylamide (NMMA), N-(alkoxymethyl)acrylamides, N-(alkoxymethyl)methacrylamides or N-(alkoxymethyl) (meth) allylcarbamates with a C₁- to C₆-alkyl radical, esters of N-methylol (meth)acrylamide and N-methylol (meth)allylcarbamates with C₁- to C₆-alkylcarboxylic acids, acrylamidoglycolic acid (AGA) and methacrylamidoglycolic acid methyl ester (MAGME)
as copolymers I) which can be crosslinked by acid.

5. Polymer powder compositions according to Claim 4, characterized in that they comprise as comonomer units a), in each case based on the total weight of the copolymer,
90 to 99.9% by weight of vinyl ester, in particular vinyl acetate,
or
49.9 to 98.9% by weight of vinyl ester, in particular vinyl acetate, and 1 to 50% by weight of α-olefin, in particular ethylene,
or
40 to 80% by weight of vinyl acetate, 5 to 45% by weight of vinyl laurate or vinyl ester of an α-branched carboxylic acid, in particular VeoVa9^{R} and/or VeoVa10^{R}, and 0 to 40% by weight of ethylene,
or
70 to 98.9% by weight of vinyl acetate and 1 to 30% by weight of vinyl ester of an α-branched carboxylic acid, in particular VeoVa9^{R} and/or VeoVa10^{R},
or
70 to 98.9% by weight of vinyl ester, in particular vinyl acetate, and 1 to 30% by weight of (meth)acrylic acid ester, in particular ethyl acrylate, n-butyl acrylate or 2-ethylhexyl acrylate,
or
50 to 75% by weight of vinyl acetate, 1 to 30% by weight of acrylic acid ester, in particular n-butyl acrylate or 2-ethylhexyl acrylate, and 1 to 40% by weight of ethylene,
or
30 to 75% by weight of vinyl acetate, 1 to 30% by weight of vinyl ester of an α-branched carboxylic acid, in particular VeoVa9^{R} and/or VeoVa10^{R}, 1 to 30% by weight of acrylic acid ester, in particular n-butyl acrylate or 2-ethylhexyl acrylate, and 1 to 40% by weight of ethylene,
or
15 to 70% by weight of vinyl acetate, 25 to 80% by weight of vinyl chloride and 4 to 40% by weight of vinyl laurate,
or
40 to 80% by weight of vinyl chloride, 9 to 35% by weight of ethylene, 10 to 45% by weight of vinyl laurate and 0 to 40% by weight of vinyl acetate,
or
20 to 80% by weight of vinyl chloride, 19 to 40% by weight of ethylene and 0 to 60% by weight of one or more monomers from the group consisting of vinyl acetate, n-butyl acrylate and 2-ethylhexyl acrylate,
or
20 to 60% by weight of vinyl acetate, 30 to 60% by weight of dibutyl or diethylhexyl maleate or fumarate and 0 to 40% by weight of vinyl laurate,
or
20 to 69% by weight of vinyl acetate, 0 to 30% by weight of ethylene and 10 to 40% by weight of one or more monomers from the group consisting of diisopropyl maleate, diisopropyl fumarate, di-t-butyl maleate, di-t-butyl fumarate, methyl t-butyl maleate and methyl t-butyl fumarate.

6. Polymer powder compositions according to Claim 4, characterized in that they comprise as comonomer units a), in each case based on the total weight of the copolymer,
90 to 99.9% by weight of n-butyl acrylate and/or 2-ethylhexyl acrylate,
or
40 to 59.9% by weight of methyl methacrylate and 59.9 to 40% by weight of n-butyl acrylate and/or 2-ethylhexyl acrylate,
or
50 to 77% by weight of ethyl acrylate and 3 to 40% by weight of methacrylic acid,
or
40 to 64.9% by weight of styrene and 35 to 59.9% by weight of n-butyl acrylate and/or 2-ethylhexyl acrylate.

7. Polymer powder compositions according to Claims 4 to 6, characterized in that they comprise 0.5 to 3.0% by weight, based on the total weight of the copolymer, of N-methylolacrylamide, N-methylolmethacrylamide, N-(isobutoxymethyl)acrylamide (IBMA) and/or N-(n-butoxymethyl)acrylamide (NBMA) as comonomer units b).

8. Polymer powder compositions according to Claims 1 to 7, characterized in that they comprise 0.5 to 10.0% by weight, based on the weight of component I), of one or more compounds from the group consisting of sodium peroxodisulphate, potassium peroxodisulphate, ammonium peroxodisulphate and sodium peroxodiphosphate, potassium peroxodiphosphate and ammonium peroxodiphosphate as component II).

9. Polymer powder compositions according to Claims 1 to 8, characterized in that they comprise 0.5 to 10.0% by weight, based on the weight of component I), of one or more compounds from the group consisting of potassium formaldehydesulphoxylate, sodium formaldehydesulphoxylate, alkali metal hydrogen sulphite, such as potassium hydrogen sulphite or sodium hydrogen sulphite, alkali metal bisulphite, such as sodium bisulphite, dithionite, sodium thiosulphate, formamidinesulphinic acid, sodium hypophosphite, ascorbic acid, glucose and dihydroxymaleic acid as component III).

10. Process for the preparation of polymer powder compositions according to Claims 1 to 9, in which the pulverulent components II) and III) are admixed to the crosslinkable or condensible copolymers I) present in powder form.

11. Use of the polymer powder composition according to Claims 1 to 9 as coating compositions, as adhesives or as binders for textiles and paper.

## Revendications

1. Compositions de poudres polymères réticulables ou condensables par acide et dispersibles dans l'eau ou hydrosolubles, comprenant
I) un ou plusieurs copolymères pulvérulents, dispersibles dans l'eau ou hydrosolubles et réticulables ou condensables par acide,
II) un ou plusieurs composés pulvérulents, dispersibles dans l'eau ou hydrosolubles parmi le groupe constitué des sels de métaux alcalins ou des sels d'ammonium d'acides peroxo,
III) un ou plusieurs agents réducteurs pulvérulents, dispersibles dans l'eau ou hydrosolubles.

2. Compositions de poudres polymères selon la revendication 1, caractérisées en ce qu'elles comprennent, en tant que copolymères condensables par acide I), des résines arène ou amino ou des polymères ayant des groupes carbonyle ou thiocarbonyle.

3. Compositions de poudres polymères selon la revendication 2, caractérisées en ce qu'elles comprennent, en tant que copolymères condensables par acide I), des résines phénoliques, des novolaques, des résols ou des résines urée-formaldéhyde ou des résines mélamine-formaldéhyde.

4. Compositions de poudres polymères selon la revendication 1, caractérisées en ce qu'elles comprennent, en tant que copolymères condensables par acide I), des copolymères ayant une T_{g} de -60°C à +60°C, comprenant
a) un ou plusieurs motifs monomères parmi le groupe constitué des esters vinyliques d'acides alkylcarboxyliques non ramifiés ou ramifiés ayant 1 à 15 atomes de C,
des esters de l'acide acrylique et de l'acide méthacrylique avec des alcools non ramifiés ou ramifiés ayant 1 à 12 atomes de C,
des mono- ou diesters de l'acide fumarique ou de l'acide maléique avec des alcools non ramifiés ou ramifiés ayant 1 à 12 atomes de C,
des diènes, des vinylaromatiques, des halogénures de vinyle et des α-oléfines et
b) 0,1 à 20,0% en poids, sur la base du poids total du copolymère, d'un ou plusieurs motifs monomères réticulables parmi le groupe constitué de N-méthylolacrylamide (NMA), N-méthylolméthacrylamide (NMMA), N-(alkoxyméthyl)acrylamides, N-(alkoxyméthyl)méthacrylamides ou N-(alkoxyméthyl) (méth)allylcarbamates avec un radical alkyle en C₁-C₆, des esters de N-méthylol(méth)acrylamide et N-méthylol(méth)allylcarbamates avec des acides alkyl (C₁-C₆) carboxyliques, l'acide acrylamidoglycolique (AGA) et l'ester méthylique de l'acide méthacrylamidoglycolique (MAGME).

5. Compositions de poudres polymères selon la revendication 4, caractérisées en ce qu'elles comprennent, en tant que motifs comonomères a), chaque fois sur la base du poids total du copolymère,
90 à 99,9% en poids d'ester vinylique, en particulier d'acétate de vinyle,
ou
49,9 à 98,9% en poids d'ester vinylique, en particulier d'acétate de vinyle ainsi que 1 à 50% en poids d'α-oléfine, en particulier d'éthylène,
ou
40 à 80% en poids d'acétate de vinyle, 5 à 45% en poids de laurate de vinyle ou d'ester vinylique d'un acide carboxylique ramifié en α, en particulier de VeoVa9^{R} et/ou VeoVa10^{R}, ainsi que 0 à 40% en poids d'éthylène,
ou
70 à 98,9% en poids d'acétate de vinyle et 1 à 30% en poids d'ester vinylique d'un acide carboxylique ramifié en α, en particulier de VeoVa9^{R} et/ou VeoVa10^{R},
ou
70 à 98,9% en poids d'ester vinylique, en particulier d'acétate de vinyle et 1 à 30% en poids d'ester d'acide (méth)acrylique, en particulier d'acrylate d'éthyle, d'acrylate de n-butyle ou d'acrylate de 2-éthylhexyle,
ou
50 à 75% en poids d'acétate de vinyle, 1 à 30% en poids d'ester d'acide acrylique, en particulier d'acrylate de n-butyle ou d'acrylate de 2-éthylhexyle, ainsi que 1 à 40% en poids d'éthylène,
ou
30 à 75% en poids d'acétate de vinyle, 1 à 30% en poids d'ester vinylique d'un acide carboxylique ramifié en α, en particulier de VeoVa9^{R} et/ou VeoVa10^{R}, 1 à 30% en poids d'ester d'acide acrylique, en particulier d'acrylate de n-butyle ou d'acrylate de 2-éthylhexyle, ainsi que 1 à 40% en poids d'éthylène,
ou
15 à 70% en poids d'acétate de vinyle, 25 à 80% en poids de chlorure de vinyle et 4 à 40% en poids de laurate de vinyle,
ou
40 à 80% en poids de chlorure de vinyle, 9 à 35% en poids d'éthylène, 10 à 45% en poids de laurate de vinyle et 0 à 40% en poids d'acétate de vinyle,
ou
20 à 80% en poids de chlorure de vinyle, 19 à 40% en poids d'éthylène, 0 à 60% en poids d'un ou plusieurs monomères parmi le groupe constitué d'acétate de vinyle, d'acrylate de n-butyle, d'acrylate de 2-éthylhexyle,
ou
20 à 60% en poids d'acétate de vinyle, 30 à 60% en poids de fumarate ou de maléate de dibutyle ou de diéthylhexyle et 0 à 40% en poids de laurate de vinyle,
ou
20 à 69% en poids d'acétate de vinyle, 0 à 30% en poids d'éthylène et 10 à 40% en poids d'un ou plusieurs monomères parmi le groupe constitué de maléate de diisopropyle, de fumarate de diisopropyle, de maléate de diterbutyle, de fumarate de di-terbutyle, de maléate de méthylterbutyle et de fumarate de méthylterbutyle.

6. Compositions de poudres polymères selon la revendication 4, caractérisées en ce qu'elles comprennent, en tant que motifs comonomères a), chaque fois sur la base du poids total du copolymère,
90 à 99,9% en poids d'acrylate de n-butyle et/ou d'acrylate de 2-éthylhexyle,
ou
40 à 59,9% en poids de méthacrylate de méthyle et 59,9 à 40% en poids d'acrylate de n-butyle et/ou d'acrylate de 2-éthylhexyle,
ou
50 à 77% en poids d'acrylate d'éthyle et 3 à 40% en poids d'acide méthacrylique,
ou
40 à 64,9% en poids de styrène et 35 à 59,9% en poids d'acrylate de n-butyle et/ou d'acrylate de 2-éthylhexyle.

7. Compositions de poudres polymères selon les revendications 4 à 6, caractérisées en ce qu'elles comprennent, en tant que motifs comonomères b), 0,5 à 3,0% en poids, sur la base du poids total du copolymère, de N-méthylolacrylamide, N-méthylolméthacrylamide, N-(isobutoxyméthyl)acrylamide (IBMA) et/ou N-(n-butoxyméthyl)acrylamide (NBMA).

8. Compositions de poudres polymères selon les revendications 1 à 7, caractérisées en ce qu'elles comprennent, en tant que composant II), 0,5 à 10,0% en poids, sur la base du poids du composant I), un ou plusieurs composés parmi le groupe constitué de peroxodisulfate de sodium, de potassium et d'ammonium et de peroxodiphosphate de sodium, de potassium et d'ammonium.

9. Compositions de poudres polymères selon les revendications 1 à 8, caractérisées en ce qu'elles comprennent, en tant que composant III), 0,5 à 10,0% en poids, sur la base du poids du composant I), un ou plusieurs composés parmi le groupe constitué de formaldéhydesulfoxylate de potassium, de formaldéhydesulfoxylate de sodium, d'hydrogénosulfite de métal alcalin, tel que l'hydrogénosulfite de potassium ou de sodium, de bisulfite de métal alcalin, tel que le bisulfite de sodium, de dithionite, de thiosulfate de sodium, d'acide formamidinesulfinique, d'hypophosphite de sodium, d'acide ascorbique, de glucose et d'acide dihydroxymaléique.

10. Procédé pour la fabrication de compositions de poudres polymères selon les revendications 1 à 9, dans lequel les composants pulvérulents II) et III) sont mélangés aux copolymères réticulables ou condensables I) présents sous forme de poudre.

11. Utilisation de la composition de poudre polymère selon les revendications 1 à 9 en tant qu'enduit, en tant qu'adhésif ou en tant que liant pour textiles et papier.
